# EUROPEAN PATENT SPECIFICATION

(11) **EP 4 059 609 B1**
(45) Date of publication and mention of the grant of the patent: **04.03.2026**
(21) Application number: 21163431.6
(22) Date of filing: 18.03.2021
(51) Int. Cl.: F16J 15/06, B04B 1/14

(54) **CENTRIFUGAL SEPARATOR, SERVICE KIT AND A METHOD OF REMOVING A SEALING RING**
FLIEHKRAFTABSCHEIDER, SERVICE-KIT UND VERFAHREN ZUM ENTFERNEN EINES DICHTRINGS
SÉPARATEUR CENTRIFUGE, KIT SERVICE ET PROCÉDÉ D'ÉLIMINATION D'UNE BAGUE D'ÉTANCHÉITÉ

(43) Date of publication of application: 21.09.2022
(73) Proprietor: Alfa Laval Corporate AB, 221 00 Lund (SE)
(72) Inventor: SÖDERLUND, Thomas, 139 35 Värmdö (SE)
(74) Representative: Alfa Laval Attorneys

(56) References cited:
- EP-A1- 0 414 298
- CN-U- 202 037 081
- DE-B- 1 144 194
- DE-C- 933 620

## Description

### Field of the Invention

The present invention relates to the field of centrifugal separators, and more particularly to a centrifugal separator comprising a bowl which comprises a sealing ring, a sealing ring kit for the centrifugal separator and a method of dismounting the sealing ring from the centrifugal separator.

### Background of the Invention

Fuel supplied to ships is usually treated on board before use in the engine in order to remove solid contaminants, such as particles of silicon and aluminium compounds (e.g. microporous aluminium silicates or aluminosilicates known as zeolites), called catalyst fines, and liquid contaminants such as water. Marine diesel engines usually accept several types of commercially available fuel oils as long as they are adequately treated on board the ship. Further, also lubricating oils for an engine may contain a portion of solid and liquid impurities, such as water, that need to be separated before use.

Centrifugal separators are generally used for separation of liquids and/or for separation of solids from a liquid. During operation, liquid mixture to be separated is introduced into a rotating bowl and heavy particles or denser liquid, usually water, accumulates at the periphery of the rotating bowl whereas less dense liquid accumulates closer to the central axis of rotation. This allows for collection of the separated fractions, e.g. by means of different outlets arranged at the periphery and close to the rotational axis, respectively.

In such centrifugal separators, a sealing ring can be used to seal between two, relative to each other, axially movable parts of a bowl of the centrifugal separator. The sealing ring can be placed in an axially open groove in a first centrifuge bowl part, which is configured to be in contact with a second centrifuge bowl part axially movable relative to the first centrifuge bowl part. The sealing ring is subjected to heavy compression between the two centrifuge bowl parts when they are pressed relative to each other. As a result of this the sealing ring will rather soon be impressed, i.e. plastically deformed, by the annular projection of the second centrifuge bowl part. Thus, the sealing ring needs to be replaced at certain intervals.

A centrifugal separator having a sealing ring of this type is disclosed by US-A4534570, DE-A-1,144,194 and DE-A-933,620.

### Summary of the Invention

The sealing rings must thus be replaced after some time of operation, during which the centrifuge bowl parts are axially moved a number of times relative to each other into and out of sealing engagement via the sealing ring. The sealing rings are usually made of plastic material, which is plastically deformable. The impression of the sealing ring will eventually become so extensive that the sealing ring has to be replaced. At this stage the ring may be brittle and thoroughly stuck into the groove. For example, a long-time exposure from chemicals in the feed, temperature and mechanical forces may affect the material and thus deteriorate the mechanical properties of the sealing ring. Therefore, the removal of the sealing ring becomes difficult and time consuming and may involve quite violent use of tools, such as hammer and chisel, knife, steel pins and other available tools and methods. The groove in the bowl hood as well as the performing service person may therefore risk injury during this procedure.

It is an object of the invention to overcome one or more limitations of the prior art. In particular, it is an overall object of the present invention to provide a centrifugal separator provided with means that facilitate the removal of a used sealing ring from a separator groove.

It is also an object of the present invention to provide a method of removing a sealing ring from a separator groove in a quicker, simpler, and more effective way than previously.

It is a further object of the present invention to facilitate the service of a centrifugal separator by providing a service kit configured for replacement of the used sealing ring. It is also an object to provide tools which facilitate the removal of the sealing ring from the groove in a simpler way than in the known separators.

The objects above are attained by the present invention as defined in the appended claims. Further objects and advantages will be explained below in the description of the invention.

In particular, the objects above are attained by a centrifugal separator comprising a centrifuge bowl configured to rotate about an axis of rotation, wherein the centrifuge bowl encloses a separator chamber comprising a set of separation discs, in which separation of a fluid mix is configured to take place. The centrifuge bowl further comprises a first, lower bowl part and a second, upper bowl part, which bowl parts are axially connectable to form a bowl wall for the centrifuge bowl. A slide member is associated with the lower bowl part and arranged axially movable between a closed position, in which the slide member is in contact with the upper bowl part and thereby closes a plurality of peripheral discharge outlets extending from the separation chamber through the centrifuge bowl wall, and an open position, in which the slide member is positioned at an axial distance from the upper bowl part, whereby said peripheral ports are open. The upper bowl part comprises at a lower edge surface, which faces the lower bowl part, a circumferentially along the edge surface extending annular groove, the groove extending symmetrically around the rotation axis and being arranged to open through an opening towards the lower bowl part. A sealing ring is arranged in the groove and has a surface facing towards and being engageable by the slide member upon an axial movement of the slide member to the closed position. According to the present disclosure, a wire member is arranged associated with the sealing ring in the groove.

The wire member, which may be a metal wire, facilitates the removal of the sealing member. The wire member is associated and thus placed in the groove together with the sealing ring and therefore is readily mounted to the groove for the dismounting purpose of the sealing ring.

The upper bowl part may comprise a through hole extending from the groove opening to a side of the upper bowl part facing away from the lower bowl part, which through hole is configured to receive a breaking tool. The breaking tool is configured to break the sealing ring and engage the wire member. The through hole provides for an easy access to the wire member, especially when the wire member is mounted at a distance from the sealing surface provided by the sealing ring.

The wire member may have a first end and a second end and is configured to fit in the groove together with the sealing ring. Thus the wire member has two free ends that can be grasped to facilitate the lifting of the wire member and thus the sealing ring from the groove. At least one of the first and second ends of the wire member may be placed in proximity of the through hole. In that way the grasping of the wire end is facilitated. The wire member may have a length of about 0.9 to 1.1 times the length of the sealing ring.

The sealing ring comprises or consists of a material other than the material of the wire member. The wire member material may withstand external forces better than the material of the sealing ring. The sealing ring may comprise or consist of polymeric material, i.e. plastics material, and the thread may comprise or consist of metal or a metal alloy, such as stainless steel.

The wire member may be separate from the sealing ring or it may be integrated in the sealing ring. If the wire member is separate from the sealing ring, the manufacturing process may be facilitated. On the other hand, if the wire member is integrated in the sealing ring, a risk for forgetting to mount it into the groove is eliminated.

The present invention also relates to a service kit configured for replacing a used sealing ring in a groove of an upper bowl part of the centrifugal separator as defined above. The service kit comprises a replacement sealing ring and a wire member associated with the sealing ring.

The wire member may have a first end and a second end, a length of about 0.9 to 1.1 times the length of the sealing ring and a cross-sectional area, which is less than 0.5 times the cross-sectional area of the sealing ring.

The service kit may further comprise a breaking tool configured to break the sealing ring and move at least part of the wire member, when placed in the centrifuge bowl groove. The service kit may further comprising a lifting tool comprising means to receive and hold an end of the wire member. Thus a full saling ring service kit is provided, which further facilitates the replacement of a used sealing ring.

The lifting tool may be configured to be rotated such that the wire member is wound around the body of the lifting tool.

The present invention further relates to a method of removing a sealing ring from an annular groove of an upper bowl part of a centrifugal separator defined above, the groove having a having an annular opening towards a lower bowl part and the sealing ring being arranged associated with a wire member in the groove, wherein the method of removing the sealing ring from the groove comprises:
- disconnecting the upper bowl part from the centrifuge bowl of the centrifugal separator;
- breaking the sealing ring by means of a breaking tool;
- lifting the wire member associated with the sealing ring from the groove in a direction towards the annular opening, whereby the wire member which is arranged in contact with the sealing ring simultaneously lifts associated part of the sealing ring from the groove.
The method may comprise grasping an end of the wire member and fixing the end to a lifting tool, and then mechanically actuating the lifting tool to lift the wire member from the groove. The mechanical actuating may comprise winding the wire member around the body of the lifting tool.

Further aspects and advantages of the present invention are described in the following detailed description.

### Brief description of the Drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figure 1 shows a schematic drawing of a centrifugal separator of the present disclosure.
Figure 2a shows a schematic cross-sectional drawing of a part of a centrifugal separator bowl with a sealing ring associated with a wire member according to an embodiment of the present invention;
Figure 2b shows a partially enlarged view of the sealing ring presented in Figure 1a;
Figure 3a and 3b shows a sealing ring designed in a conventional manner, before and after impression.
Figure 4-7 illustrate with pictures the steps of the method according to the present disclosure.

### Detailed Description

Centrifugal separators in the present disclosure are aimed for separation of a liquid feed mixture and are described generally below. The liquid feed mixture may be an aqueous liquid or an oily liquid. As an example, the centrifugal separator may be configured to separate impurities, such as water and/or particles, from oil, such as fuel oil or lubricating oil. The liquid feed mixture is thus separated into at least two phases; a liquid light phase and a liquid heavy phase. The liquid heavy phase has a density that is higher than the density of the light phase. The centrifugal separator may be arranged to separate the liquid feed mixture into a liquid light phase, a liquid heavy phase and a solids phase, i.e. a sludge phase. The separated liquid heavy phase may comprise more than 50 %wt of liquid, such as more than 75 %wt of liquid, such as more than 90 %wt of liquid. In analogy, a sludge phase may comprise a small amount of liquid, but such as at least 50 %wt of solids, such as more than 75 %wt of solids.

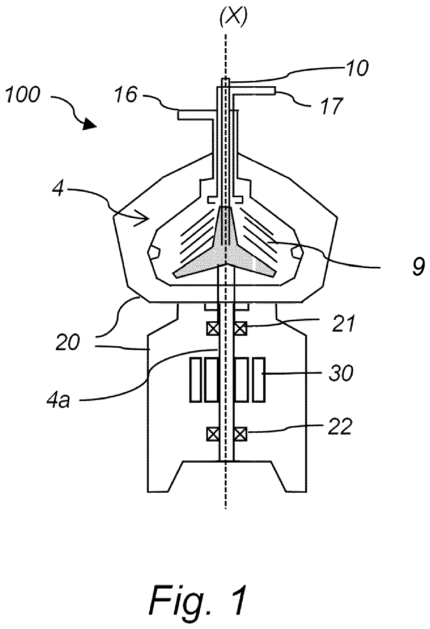

The centrifugal separator may comprise a frame, which is a non-rotating part. The centrifugal separator also comprises a rotating part, and the rotating part may be supported by the frame, for example by at least one bearing device, which may comprise a ball bearing. The rotating part of the separator may be arranged to be rotated around vertical axis of rotation, i.e. the axis of rotation may extend vertically. The rotating part comprises a centrifuge rotor, commonly also called centrifuge bowl. The centrifuge bowl is usually supported by a spindle, i.e. a rotating shaft, and may thus be mounted to rotate with the spindle. Consequently, the rotating part may comprise a spindle that is rotatable around the axis of rotation (depicted in Fig. 1 as X). The centrifugal separator may be arranged such that the centrifuge bowl is supported by the spindle at one of its ends, such at the bottom end or the top end of the spindle.

The rotating part is rotated by means of a drive member. The drive member may comprise an electrical motor having a rotor and a stator. The rotor may be fixedly connected to the rotating part, such as to the spindle. Advantageously, the rotor of the electrical motor may be provided on or fixed to the spindle of the rotating part. Alternatively, the drive member may be provided beside the spindle and rotate the rotating part by a suitable transmission, such as a belt or a gear transmission.

The centrifuge bowl encloses by walls of the bowl a separation space and a sludge space. The walls of the bowl may be comprised of walls of a lower bowl part and an upper bowl part. The separation space, in which the separation of the fluid mixture takes place, comprises a stack of separation discs. The separation discs may e.g. be of metal. Further, the separation discs may be frustoconical separation discs, i.e. having separation surfaces forming frustoconical portions of the separation discs. The angle of inclination of the separation surface may be within the range of 30-50 degrees, preferably about 40 degrees, to the radial direction. Radially outside of the stack of separation discs is the sludge space, in which separated sludge and heavy phase is collected during operation. The sludge space thus extends radially from the outer portion of the stack of separation discs to the inner periphery of the centrifuge bowl.

The separation discs are arranged coaxially around the axis of rotation (X) at a distance from each other such that to form passages between each two adjacent separation discs. The separation discs in the disc package may be arranged such that the liquid mixture to be separated flows radially inwards in the passages between each two adjacent separation discs of the stack.

As used herein, the term "axially" denotes a direction which is parallel to the rotational axis (X). Accordingly, relative terms such as "above", "upper", "top", "below", "lower", and "bottom" refer to relative positions along the rotational axis (X). Correspondingly, the term "radially" denotes a direction extending radially from the rotational axis (X). A "radially inner position" thus refers to a position closer to the rotational axis (X) compared to "a radially outer position".

The centrifugal separator comprises an inlet for liquid mixture to be separated (the liquid feed mixture). This inlet may be arranged for receiving the liquid feed mixture and may be arranged centrally in the centrifuge rotor, thus at rotational axis (X).

The centrifugal separator may be arranged such that a separated heavy liquid phase moves towards the periphery of the separator space and is then guided above the disc stack to a first outlet. A second outlet may be arranged for a light liquid phase. The first and second outlets are thus liquid outlets. The second liquid outlet for the liquid light phase may be arranged at a smaller radius than the first liquid outlet. The separator may further comprise a third set of outlets for discharging sludge and liquid heavy phase accumulated in the sludge space. For this purpose, the centrifuge rotor may for example comprise at its outer periphery a set of radially arranged sludge outlets in the form of intermittently openable outlets. The centrifuge rotor may as an alternative comprise at its outer periphery open nozzles through which certain flow of sludge and/or heavy phase is discharged continuously.

Consequently, the centrifugal separator may comprise a first liquid outlet for a heavy phase, a second liquid outlet for a light phase and sludge outlets for separated sludge. The first and/or the second outlets may be arranged on an upper portion of the centrifuge rotor, such as axially above the stack of separation discs.

The first and second liquid outlets may be arranged in a first and second outlet chamber, respectively. These chambers may comprise a stationary paring device for discharging a separated liquid phase. Thus, the first liquid outlet may be in the form of a first stationary paring device arranged in a first outlet chamber, whereas the second liquid outlet may be in the form of a second stationary paring device arranged in a second outlet chamber.

Thus, during operation, a separated liquid phase may form a liquid body rotating with the rotating part in an outlet chamber, and a stationary paring device arranged in the outlet chamber may be arranged for paring the liquid phase out of the centrifugal separator. The stationary paring device may be a paring disc, such as an annular paring disc.

The centrifugal separator and the method according to the present disclosure will be further illustrated by the following description with reference to the accompanying drawings.

Fig. 1 shows a cross-section of an embodiment of a centrifugal separator 1 configured to separate a heavy phase and a light phase from a liquid feed mixture. The centrifugal separator 100 has a rotating part 40, comprising a centrifuge rotor, i.e. a centrifuge bowl, 4 and drive spindle 4a.

The centrifugal separator 100 is further provided with a drive motor 30. This motor 30 may for example comprise a stationary element and a rotatable element, which rotatable element surrounds and is connected to the spindle 4a such that it transmits driving torque to the spindle 4a and hence to the centrifuge bowl 4 during operation. The drive motor 30 may be an electric motor. Alternatively, the drive motor 30 may be connected to the spindle 4a by transmission means. The transmission means may be in the form of a worm gear which comprises a pinion and an element connected to the spindle 4a in order to receive driving torque. The transmission means may alternatively take the form of a propeller shaft, drive belts or the like, and the drive motor may alternatively be connected directly to the spindle 4a.

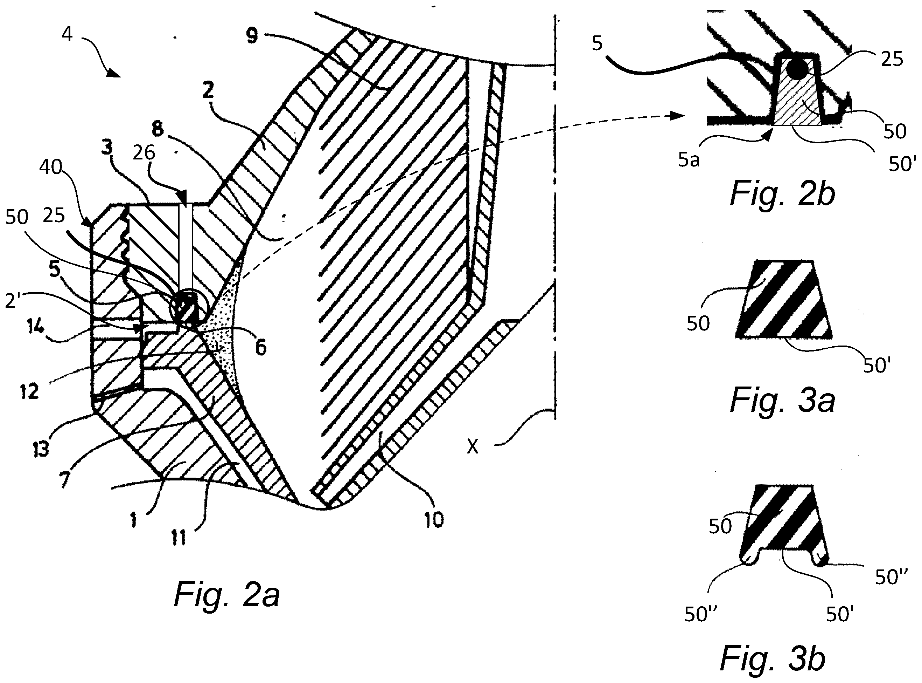

The centrifuge bowl 4, shown partly in more detail in Fig. 2a, is supported by the spindle 4a, which is rotatably arranged in a frame 20 around the vertical axis of rotation X in a bottom bearing 22 and a top bearing 21. The stationary frame 20 surrounds centrifuge rotor 4. The centrifuge bowl also comprises a stack of separation discs, which enable separation of the liquid into different fractions.

Also shown in Fig. 1 is an inlet pipe 10 extending into the centrifuge bowl 4 axially from the top. After separation has taken place within the centrifuge bowl 4, separated liquid heavy phase is discharged thorough a stationary outlet pipe 16, whereas separated liquid light phase is discharged through a stationary outlet pipe 17.

Fig. 2a shows a partial and schematical cross-section of an example centrifugal separator bowl 4 comprising a sealing ring 50. The centrifugal separator of the present disclosure may be of the type illustrated and is configured to separate a heavy phase and a light phase from a liquid feed mixture.

The centrifuge bowl 4 comprises a first, lower, centrifuge bowl part 1 and a second, upper, centrifuge bowl part 2. The lower part 1 and the upper part 2 are arranged axially connectable and disconnectable to each other. In the illustrated example, the parts 1 and 2 can be axially joined by any connectable and disconnectable means, such as a lock ring. The centrifuge bowl parts 1 and 2 are arranged symmetrically around the axis of rotation X in a symmetrical manner and a form wall 40 of the centrifuge bowl 4.

A hydraulically operable slide member 7, which is configured to move axially in an open and closed position to open or close one or more peripheral ports or discharge outlets 14, is provided in association with the lower bowl part 1. In the closed position the slide member 7 is in contact with the upper bowl part 2 and thereby closes the plurality of the peripheral ports 14 extending from the separation chamber 8 through the centrifuge bowl wall 40. In the open position the slide member 7 is positioned at an axial distance from the upper bowl part 2, whereby said peripheral ports are open. Between the slide member 7 and the upper centrifuge bowl part 2 there is formed a separation chamber 8, in which the set of conical separation discs or plates 9, i.e. a disc stack, is arranged. The separation discs 9 provide for an efficient separation of the liquid mixture into at least a liquid light phase and a liquid heavy phase. Thus, in the separation chamber 8, centrifugal separation of e.g. a liquid feed mixture takes place during operation.

The separation chamber 8 is in fluid connection with the inlet 10 for a mixture of liquid and sludge which are to be separated. Between the slide member 7 and the lower centrifuge bowl part 1 there is a chamber 11, which during operation of the centrifuge bowl is charged and kept filled with hydraulic fluid, usually water. When desired, the supply of the hydraulic fluid to the chamber 11 can be temporarily interrupted or cut off, whereby the chamber 11 is drained via a number of throttled peripheral outlets 13.

By the rotation of the centrifuge bowl a liquid pressure is created in the chamber 11, which forces the slide member 7 into a sealing contact with a sealing ring 5 arranged in the upper bowl part 2. The sealing contact is formed against the action of the pressure from the mixture of sludge and liquid present in the separation chamber 8. The reference number 12 designates sludge separated in the separation chamber 8.

When the sludge content in the chamber reaches a reference value, the supply of the hydraulic fluid to the chamber 11 is temporarily interrupted. The chamber 11 is thus drained and the slide member 7 will be pressed downwards by the pressure of the contents of the separation chamber 8, and the separated sludge 12 will be discharged through a number of peripheral outlets 14. Depending on the length of the time period, during which the supply of hydraulic fluid to the chamber 11 is interrupted, more or less of the contents of the separation chamber 8 will be discharged through the outlets 14.

Liquid mixture to be separated may comprise a light and heavy liquid phase, which both have a lower density than the sludge and are separated from the sludge. The liquid phases are arranged to leave the separation chamber 8 through the outlets 16 and/or 17 (see Fig. 1), which are arranged radially inside the set of plates 9. The separated liquid heavy phase is discharged thorough the stationary outlet pipe 16, whereas the separated liquid light phase is discharged through the stationary outlet pipe 17.

As further shown in Fig. 2a and in an enlarged detail view in Fig. 2b, the upper bowl part 2 comprises at a lower edge surface 2', which faces the lower bowl part 1, a circumferentially along the edge surface extending annular groove 5. The groove 5 extends symmetrically around the rotation axis X and is arranged to open through an annular opening 5a towards the lower bowl part 1 in the axial direction. A sealing ring 50 is arranged in the groove 5. The sealing ring 50 has a sealing surface 50' facing towards the slide member 7 and the sealing surface 50' is engageable by the slide member 7 upon axial movement to the closed position. The sealing ring 50 is configured to fit into the groove 5 and is placed in the groove 5, suitably in a fluid tight manner so that no liquid will leak from the separation chamber. The slide member may comprise an annular projection 6, which may be configured to abut towards the sealing ring. Due to the mechanical forces generated during the separation process when the projection 6 abuts towards the sealing ring 50, the sealing ring 50 is eventually deformed.

When the sealing ring is to be replaced, it has been tightly packed into the groove, and the polymeric material characteristics may have been deteriorated. Therefore, as explained above, it may be difficult and time consuming to remove the used sealing ring and replace it with a new one. Therefore, there is a need for a simple sealing ring arrangement and method to remove the sealing ring. The sealing ring material, which may be polymeric material, may also become brittle and thus obtain decreased strength characteristics, whereby it will become even more difficult to remove from the groove. The deterioration of the material characteristics and the deformation, i.e. plastical deformation, of the sealing ring are caused partly by the influence of the process fluids and partly due to the mechanical forces during the impression of the projection 6 towards the sealing ring 50.

In Fig. 3a an example of a sealing ring 50 designed in a conventional manner is shown in a cross section, as it looks like in a newly manufactured condition. Other cross-sectional shapes may be possible. After some time of operation, the deformation of the sealing ring 50 of this kind may assume a shape as what is illustrated in Fig. 2b. Thus, the sealing surface 50' of the sealing ring which faces the slide member 7 and/or the projection 6, is deformed so that two ridges 50" are formed on the radial edges of the sealing surface 50'. Thus, the sealing ring needs to be replaced. This replacement is time consuming and difficult and it is an objective of the present invention to facilitate the removal of the used sealing ring.

To attain this objective, a wire member 25 is arranged associated with the sealing ring 50 in the groove 5. The wire member is configured to lift at least part of the sealing ring from the groove when the wire member is influenced by lifting forces. By "associated with the sealing ring" is meant that the wire member is integrated in the sealing ring during the manufacture or that it is in close contact with the sealing ring. For example, the wire member may be fitted in the groove before fitting the sealing ring, so that they are in close contact with each other. The wire member is preferably arranged at a distance from the sealing surface 50' so that it is located under the sealing ring or as far from the sealing surface as possible to minimize a risk for damaging the sealing surface.

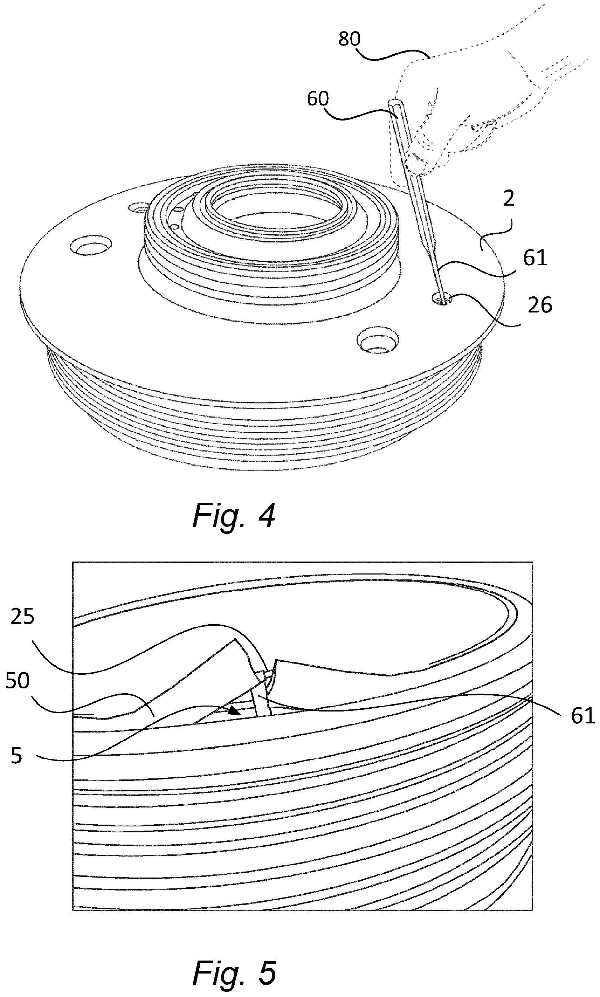

The upper bowl part 2 comprises a through hole 26 extending from the groove 5 to a side of the upper bowl part 2 facing away from the lower bowl part 1, as best illustrated in Fig. 2a. The through hole 26 is configured to receive a breaking tool 60 having an edged portion 61, which edged portion 61 is configured to break the sealing ring 50 and engage the wire member 25, see Fig. 4 and 5.

The wire member 25 is made of a flexible material. The wire member is made of a material that has mechanical strength properties configured to withstand forces breaking the sealing ring without breaking itself. Further, the material is configured to withstand the lifting forces. The wire member 25 is elongated and has a first end and a second end and is configured to fit in the groove together with the sealing ring. At least one of the first or second ends of the wire member 25 are placed in proximity of the at least through hole 26 in the groove. In this way it will be easy to pick up the end of the wire and therefore the removal of the sealing ring can be facilitated. The wire member may have the same length as the sealing ring or it may be somewhat shorter or longer. Suitably, the length is from about 0.9 to 1.1 times the length of the sealing ring. The wire member has a cross-sectional area, which is smaller than the cross-sectional area of the sealing ring. The wire member may comprise or consist of metal or a metal alloy. For example, the wire member may comprise stainless steel, which is flexible and strong material and withstands corrosion. The wire member can be separate from the sealing ring or integrated in the sealing ring.

The sealing ring may comprise or consists of plastics, i.e. a polymeric material. The polymeric material may comprise one or more polymeric materials and is suitably a thermoplastic material, which can be molded to obtain the desired ring-shape.

The present invention also relates to a service kit configured for replacing a used sealing ring 50 from a groove of an upper bowl part 2 of the centrifugal separator described above. The service kit comprises a new and unused sealing ring 50. A sealing ring 50 of this type is illustrated in e.g. Fig. 2a, 2b and 5. The sealing ring 50 is adapted for the annular centrifuge bowl groove 5. Further in the kit is included a wire member 25 associated with the sealing ring 50. The sealing ring in the service kit is provided with dimensions and materials adapted to the specific size and type of the centrifugal separator. The wire member 25 may be integrated in the sealing ring 50 by for example integrating it already during the manufacture of the sealing ring. The sealing ring may be e.g. molded, for example by injection molding. The wire member 25, which may be made of e.g. stainless steel, may in that case be placed in a mold before injecting molten plastic to the mold. Other molding methods may be used. Alternatively, the wire member 25 is a separate component included in the service kit. The length and the thickness of the wire member 25 is adapted to the centrifugal separator in question. The wire member may be an elongated piece of flexible, stiff and strong material having a first end and a second end and has a length of about 0.9 to 1.1 times the length of the sealing ring and has a cross-sectional area, which is less than 0.5 times the cross-sectional area of the sealing ring. In this way the sealing ring will have a larger volume and will withstand wear when connected and disconnected to the slide member 7 during the operation of the centrifugal separator.

The service kit may further comprise a breaking tool 60, see Fig. 4, which is configured to break the sealing ring 50 and move at least part of the wire member, when external force is applied to the breaking tool. The external force is applied, when the breaking tool, or the edged portion 61 thereof is brought into contact with the sealing ring 50 in the centrifuge bowl groove 5. How the breaking tool can be used is described more in detail below in connection with Fig. 4-7.

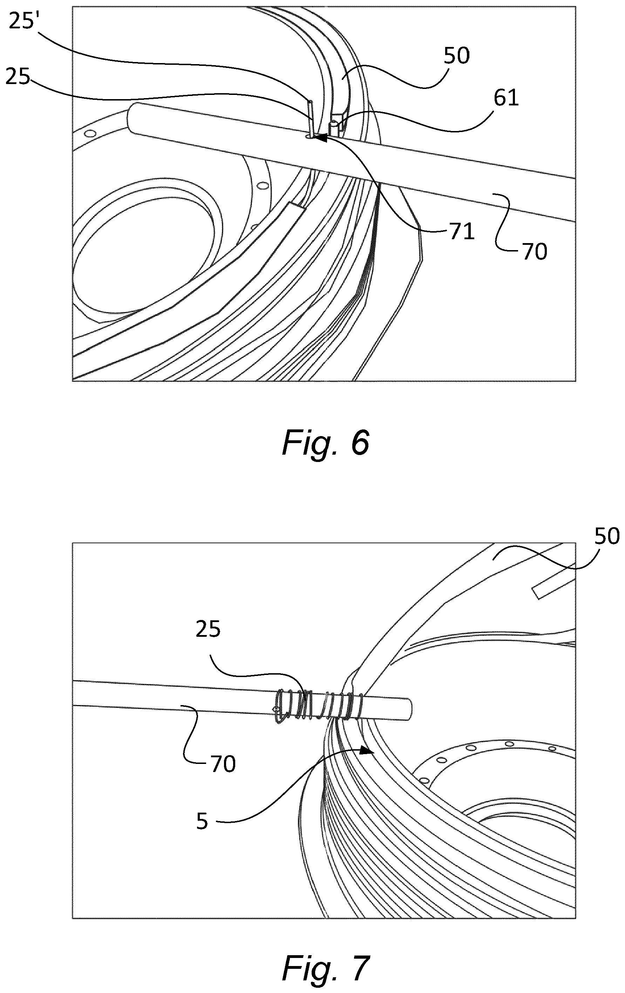

The service kit may further comprise a lifting tool 70 comprising means 71 to receive and hold an end 25' of the wire member 25, see Fig. 7. The lifting tool may be a separate tool, or the breaking tool may comprise means to hold the end of the wire member, and thus the tools 60 and 70 is integrated to one single tool. The lifting tool may be configured to be rotated such that the wire member is wound around the body of the lifting tool. When the wire member is wound around the body of the lifting tool, lifting forces are applied to the sealing ring, as further illustrated e.g. in Fig. 7 and described below.

The present disclosure also relates to a method of removing a sealing ring, suitably the used sealing ring, from an annular groove of an upper bowl part 2 of the centrifugal separator 100 defined above. Reference is made to Fig. 4-7 in which it is illustrated how the method can be performed.

The method of removing the sealing ring 50 from the groove 5 comprises in a first step of dismounting the upper bowl part (2) from the centrifuge bowl 4 of the centrifugal separator 100. Figure 4 illustrates the upper bowl part 2 when it has been dismounted. In the illustrated example, the upper bowl part 2 comprises a through hole 26, which extends through the wall of the upper bowl member. Thus, the through hole 26 extends from the groove 5, to a side of the upper bowl part 2 facing away from the lower bowl part 1, as shown in Fig. 2a. The through hole 26 is configured to receive a breaking tool (60; 61), which is configured to break the sealing ring 50 and engage the wire member 25.

In the next step the sealing ring is broken by means of the breaking tool. In the illustrated example in Fig. 4, the edged portion 61 of the breaking tool 60 is inserted through the through hole 26 so that it passes to the annular groove 5 and comes into contact with the sealing ring 50 and/or the wire member 25. When the user via hand 80 applies sufficient high external force to the tool 60, the sealing ring breaks, but the wire member 25 will not break.

In the next step illustrated in Fig. 5 the wire member 25 associated with the sealing ring 50 is lifted from the groove in a direction towards the annular opening 5a by means of the breaking tool 60, which may serve at least initially as a lifting tool. The wire member is suitably placed in the groove so that an end of the wire member is close to the through hole, whereby will be easy to engage the end and thus lift the wire towards the annular opening 5a. Thereby the wire member 25, which is arranged in contact with the sealing ring 50, simultaneously lifts associated parts of the sealing ring from the groove 50.

In the illustrated example in Fig. 6 a separate lifting tool 70 is illustrated. In the method the next step comprises grasping the end 25' of the wire member 25 and fixing the end to the lifting tool. In Fig. 6, the lifting tool is provided with a through hole 71, through which the wire member 25 is lead so that the end 25' of the wire member can be fixed around the tool 70. It should be noted that the lifting tool could be the breaking tool or a separate tool. The fixing of the end of the wire member to the tool can be done by ay suitable means, i.e. by tying the end around the tool. After fixing of the end, the tool is mechanically actuated so as to lift the wire member from the groove. Suitably, the mechanical actuating comprises winding of the wire member 25 around the body of the lifting tool 70, as shown in Fig. 7. Instead of performing the actuating manually, it could be performed automatically by means of a winding device, which may be e.g. electrically driven.

Thus, the centrifugal separator comprising a sealing ring with associated wire member will be easier to dismount from the groove than in the prior art solutions. Therefore, the replacement of a used sealing ring will be facilitated. The method described provides for a timesaving and facilitated replacement of the sealing ring. The service kit provides for an easy and time-saving replacement aid for the used sealing ring.

The invention is not limited to the embodiment disclosed but may be varied and modified within the scope of the claims set out below. The invention is not limited to the orientation of the axis of rotation (X) disclosed in the figures. The term "centrifugal separator" also comprises centrifugal separators with a substantially horizontally oriented axis of rotation. The wordings "upper" and "lower" bowl parts are used to facilitate the understanding of the description but could be interpreted as "second" and "first" bowl parts and could be place in a mirror imaged way instead. In the above the inventive concept has mainly been described with reference to a limited number of examples.

## Claims

1. A centrifugal separator (100) comprising a centrifuge bowl (4) configured to rotate about an axis of rotation (X), the centrifuge bowl (4) enclosing a separator chamber (8) comprising a set of separation discs (9), in which separation of a fluid mix is configured to take place, the centrifuge bowl further comprising
- a first, lower bowl part (1) and a second, upper bowl part (2), which bowl parts are axially connectable to form a bowl wall (40) for the centrifuge bowl (4), and
- a slide member (7) associated with the lower bowl part (1) and arranged axially movable between a closed position, in which the slide member (7) is in contact with the upper bowl part (2), thereby closing a plurality of peripheral discharge outlets (14) extending from the separation chamber 8 through the centrifuge bowl wall (40), and an open position, in which the slide member (7) is positioned at an axial distance from the upper bowl part (2), whereby said peripheral ports are open, wherein
- the upper bowl part (2) comprises at a lower edge surface (2'), which faces the lower bowl part (1), a circumferentially along the edge surface extending annular groove (5), the groove extending symmetrically around the rotation axis and being arranged to open through a groove opening (5a) towards the lower bowl part (1), wherein
- a sealing ring (50) is arranged in the groove (5), the sealing ring (50) having a surface facing towards and being engageable by the slide member (7) upon an axial movement of the slide member (7) to the closed position, **characterized in that**
- a wire member (25) is arranged associated with the sealing ring (50) in the groove.

2. The centrifugal separator of claim 1, wherein the upper bowl part (2) comprises a through hole (26) extending from the groove (5) to a side of the upper bowl part (2) facing away from the lower bowl part (1), which through hole is configured to receive a breaking tool (60; 61).

3. The centrifugal separator of claim 1 or 2, wherein the wire member (25) has a first end and a second end (25') and is configured to fit in the groove (5) together with the sealing ring (50).

4. The centrifugal separator of claim 3, wherein at least one of the first and second ends (25') of the wire member (25) is placed in the groove (5) in proximity to the through hole (26).

5. The centrifugal separator of any one of the preceding claims, wherein the wire member (25) has a length of about 0.9 to 1.1 times the length of the sealing ring (50).

6. The centrifugal separator of any one of the preceding claims, wherein the wire member (25) is arranged in the groove (5) at a distance from a sealing surface (50') of the sealing ring (50).

7. The centrifugal separator of any one of the preceding claims, wherein the sealing ring (50) comprises or consists of a polymeric material and the wire member (25) comprises or consists of metal or a metal alloy, such as stainless steel.

8. The centrifugal separator of any one of the preceding claims, wherein the wire member (25) is separate from the sealing ring (50).

9. The centrifugal separator of any one of the preceding claims 1-7, wherein the wire member (25) is integrated in the sealing ring (50).

10. A service kit configured for replacing a used sealing ring (50) in a groove (5) of an upper bowl part (2) of the centrifugal separator (100) as defined in any one of the preceding claims 1-9, the service kit comprising a replacement sealing ring (50) and a wire member (25) associated with the sealing ring (25).

11. The service kit according to claim 10, wherein the wire member (25) has a first end and a second end (25'), a length of about 0.9 to 1.1 times the length of the sealing ring (50) and a cross-sectional area, which is less than 0.5 times the cross-sectional area of the sealing ring (50).

12. The service kit according to claim 10 or 11 further comprising a breaking tool (60) configured to break the sealing ring (50) and move at least part of the wire member (25), when placed in the centrifuge bowl groove (5).

13. The service kit according to any one of claims 10 to 12 further comprising a lifting tool (70) comprising means (71) to receive and hold an end (25') of the wire member (25).

14. The service kit according to claim 13, wherein the lifting tool (70) is configured to be rotated such that the wire member (25) is wound around the body of the lifting tool (70).

15. A method of removing a sealing ring (50) from an annular groove (5) of an upper bowl part (2) of a centrifugal separator (100) according to any of claims 1-9, the groove (5) having a having an annular opening (5a) towards a lower bowl part (1) and the sealing ring (50) is arranged associated with a wire member (25) in the groove (5), wherein the method of removing the sealing ring (50) from the groove comprises:
- disconnecting the upper bowl part (2) from the centrifuge bowl (4) of the centrifugal separator (100);
- breaking the sealing ring (50) by means of a breaking tool (60; 61);
- lifting the wire member (25) associated with the sealing ring (50) from the groove (5) in a direction towards the annular opening (5a), whereby the wire member (25), which is arranged in contact with the sealing ring (50), simultaneously lifts associated part of the sealing ring (50) from the groove (5).

16. The method according to claim 15, comprising grasping an end (25') of the wire member (25) and fixing the end to a lifting tool (70; 71), and then mechanically actuating the lifting tool (70) to lift the wire member from the groove (5).

17. The method according to claim 16, wherein the mechanical actuating comprises winding the wire member (25) around the body of the lifting tool (70).

## Patentansprüche

1. Zentrifugalseparator (100), umfassend eine Zentrifugentrommel (4), die so konfiguriert ist, dass sie um eine Rotationsachse (X) rotiert, wobei die Zentrifugentrommel (4) eine Trennkammer (8) umschließt, die einen Satz von Trennscheiben (9) umfasst, die so konfiguriert ist, dass in ihr eine Trennung eines Flüssigkeitsgemisches erfolgt, wobei die Zentrifugentrommel weiter Folgendes umfasst:
- einen ersten, unteren Trommelteil (1) und einen zweiten, oberen Trommelteil (2), wobei die Trommelteile axial miteinander verbunden werden können, um eine Trommelwand (40) für die Zentrifugentrommel (4) zu bilden, und
- ein Gleitelement (7), das mit dem unteren Trommelteil (1) verknüpft und axial zwischen einer geschlossenen Position, in der das Gleitelement (7) mit dem oberen Trommelteil (2) in Kontakt steht und dadurch eine Vielzahl von peripheren Auslassöffnungen (14) verschließt, die sich von der Trennkammer (8) durch die Zentrifugentrommelwand (40) erstrecken, und einer offenen Position beweglich angeordnet ist, in der das Gleitelement (7) in einem axialen Abstand vom oberen Trommelteil (2) positioniert ist, wodurch die peripheren Öffnungen offen sind, wobei
- der obere Trommelteil (2) an einer unteren Kantenfläche (2'), die dem unteren Trommelteil (1) zugewandt ist, eine sich in Umfangsrichtung entlang der Kantenfläche erstreckende ringförmige Nut (5) umfasst, wobei sich die Nut symmetrisch um die Rotationsachse erstreckt und so angeordnet ist, dass sie durch eine Nutöffnung (5a) zum unteren Trommelteil (1) hin mündet, wobei
- in der Nut (5) ein Dichtungsring (50) angeordnet ist, wobei der Dichtungsring (50) eine Oberfläche aufweist, die dem Gleitelement (7) zugewandt ist und mit diesem bei einer axialen Bewegung des Gleitelements (7) in die geschlossene Position in Eingriff bringbar ist,
**dadurch gekennzeichnet, dass**
- ein Drahtelement (25) verknüpft mit dem Dichtring (50) in der Nut angeordnet ist.

2. Zentrifugalseparator nach Anspruch 1, wobei der obere Trommelteil (2) ein Durchgangsloch (26) umfasst, das sich von der Nut (5) bis zu einer Seite des oberen Trommelteils (2) erstreckt, die vom unteren Trommelteil (1) abgewandt ist, wobei das Durchgangsloch zur Aufnahme eines Brechwerkzeugs (60; 61) konfiguriert ist.

3. Zentrifugalseparator nach Anspruch 1 oder 2, wobei das Drahtelement (25) ein erstes Ende und ein zweites Ende (25') aufweist und so konfiguriert ist, dass es zusammen mit dem Dichtungsring (50) in die Nut (5) passt.

4. Zentrifugalseparator nach Anspruch 3, wobei zumindest eines von dem ersten und dem zweiten Ende (25') des Drahtelements (25) in der Nähe des Durchgangslochs (26) in der Nut (5) platziert ist.

5. Zentrifugalseparator nach einem der vorstehenden Ansprüche, wobei das Drahtelement (25) eine Länge von etwa dem 0,9- bis 1,1-Fachen der Länge des Dichtungsrings (50) aufweist.

6. Zentrifugalseparator nach einem der vorstehenden Ansprüche, wobei das Drahtelement (25) in einem Abstand von einer Dichtungsfläche (50') des Dichtungsrings (50) in der Nut (5) angeordnet ist.

7. Zentrifugalseparator nach einem der vorstehenden Ansprüche, wobei der Dichtungsring (50) ein polymeres Material umfasst oder aus diesem besteht und das Drahtelement (25) Metall oder eine Metalllegierung, wie z. B. Edelstahl, umfasst oder aus dieser besteht.

8. Zentrifugalseparator nach einem der vorstehenden Ansprüche, wobei das Drahtelement (25) vom Dichtungsring (50) getrennt ist.

9. Zentrifugalseparator nach einem der vorstehenden Ansprüche 1 bis 7, wobei das Drahtelement (25) in den Dichtungsring (50) integriert ist.

10. Service-Kit, das zum Ersetzen eines verbrauchten Dichtungsrings (50) in einer Nut (5) eines oberen Trommelteils (2) des Zentrifugalseparators (100) nach einem der vorstehenden Ansprüche 1 bis 9 konfiguriert ist, wobei das Service-Kit einen Ersatzdichtungsring (50) und ein mit dem Dichtungsring (25) verknüpftes Drahtelement (25) umfasst.

11. Service-Kit nach Anspruch 10, wobei das Drahtelement (25) ein erstes Ende und ein zweites Ende (25') aufweist, eine Länge von etwa dem 0,9- bis 1,1-Fachen der Länge des Dichtungsrings (50) und eine Querschnittsfläche aufweist, die weniger als das 0,5-fache der Querschnittsfläche des Dichtungsrings (50) beträgt.

12. Service-Kit nach Anspruch 10 oder 11, weiter umfassend ein Brechwerkzeug (60), das so konfiguriert ist, dass es den Dichtungsring (50) aufbricht und zumindest einen Teil des Drahtelements (25) bewegt, wenn es in die Zentrifugentrommelnut (5) eingesetzt wird.

13. Service-Kit nach einem der Ansprüche 10 bis 12, weiter umfassend ein Hebewerkzeug (70), das Mittel (71) zum Aufnehmen und Halten eines Endes (25') des Drahtelements (25) umfasst.

14. Service-Kit nach Anspruch 13, wobei das Hebewerkzeug (70) so konfiguriert ist, dass es derart gedreht werden kann, dass das Drahtelement (25) um den Körper des Hebewerkzeugs (70) gewickelt wird.

15. Verfahren zum Entfernen eines Dichtungsrings (50) aus einer ringförmigen Nut (5) eines oberen Trommelteils (2) eines Zentrifugalseparators (100) nach einem der Ansprüche 1 bis 9, wobei die Nut (5) eine ringförmige Öffnung (5a) zu einem unteren Trommelteil (1) aufweist und der Dichtungsring (50) verknüpft mit einem Drahtelement (25) in der Nut (5) angeordnet ist, wobei das Verfahren zum Entfernen des Dichtungsrings (50) aus der Nut Folgendes umfasst:
- Trennen des oberen Trommelteils (2) von der Zentrifugentrommel (4) des Zentrifugalseparators (100);
- Aufbrechen des Dichtungsrings (50) mittels eines Brechwerkzeugs (60; 61);
- Anheben des mit dem Dichtungsring (50) verknüpften Drahtelements (25) aus der Nut (5) in Richtung der ringförmigen Öffnung (5a), wodurch das mit dem Dichtungsring (50) in Kontakt angeordnete Drahtelement (25) gleichzeitig einen verknüpften Teil des Dichtungsrings (50) aus der Nut (5) anhebt.

16. Verfahren nach Anspruch 15, umfassend das Greifen eines Endes (25') des Drahtelements (25) und Befestigen des Endes an einem Hebewerkzeug (70; 71) und dann mechanisches Betätigen des Hebewerkzeugs (70) zum Anheben des Drahtelements aus der Nut (5).

17. Verfahren nach Anspruch 16, wobei die mechanische Betätigung das Aufwickeln des Drahtelements (25) um den Körper des Hebewerkzeugs (70) umfasst.

## Revendications

1. Séparateur centrifuge (100) comprenant un bol de centrifugeuse (4) configuré pour tourner autour d'un axe de rotation (X), le bol de centrifugeuse (4) renfermant une chambre de séparation (8) comprenant un ensemble de disques de séparation (9), dans laquelle la séparation d'un mélange de fluides est configurée pour avoir lieu, le bol de centrifugeuse comprenant en outre
- une première partie de bol inférieure (1) et une seconde partie de bol supérieure (2), lesquelles parties de bol peuvent être connectées axialement pour former une paroi de bol (40) pour le bol de centrifugeuse (4), et
- un organe coulissant (7) associé à la partie de bol inférieure (1) et agencé de manière mobile axialement entre une position fermée, dans laquelle l'organe coulissant (7) est en contact avec la partie de bol supérieure (2), fermant ainsi une pluralité d'orifices d'évacuation périphériques (14) s'étendant de la chambre de séparation (8) à travers la paroi de bol de centrifugeuse (40), et une position ouverte, dans laquelle l'organe coulissant (7) est positionné à une distance axiale de la partie de bol supérieure (2), selon lequel lesdits orifices périphériques sont ouverts, dans lequel
- la partie de bol supérieure (2) comprend, au niveau d'une surface de bord inférieure (2'), qui fait face à la partie de bol inférieure (1), une rainure annulaire (5) s'étendant de manière circonférentielle le long de la surface de bord, la rainure s'étendant symétriquement autour de l'axe de rotation et étant agencée pour s'ouvrir à travers une ouverture de rainure (5a) vers la partie de bol inférieure (1), dans lequel
- une bague d'étanchéité (50) est agencée dans la rainure (5), la bague d'étanchéité (50) présentant une surface faisant face à et pouvant être mis en prise par l'organe coulissant (7) lors d'un mouvement axial de l'organe coulissant (7) vers la position fermée,
**caractérisé en ce que**
- un organe de fil (25) est agencé en association avec la bague d'étanchéité (50) dans la rainure.

2. Séparateur centrifuge selon la revendication 1, dans lequel la partie de bol supérieure (2) comprend un trou traversant (26) s'étendant de la rainure (5) à un côté de la partie de bol supérieure (2) orienté à l'opposé de la partie de bol inférieure (1), lequel trou traversant est configuré pour recevoir un outil de rupture (60 ; 61).

3. Séparateur centrifuge selon la revendication 1 ou 2, dans lequel l'organe de fil (25) présente une première extrémité et une seconde extrémité (25') et est configuré pour tenir dans la rainure (5) conjointement avec la bague d'étanchéité (50).

4. Séparateur centrifuge selon la revendication 3, dans lequel au moins une des première et seconde extrémités (25') de l'organe de fil (25) est placée dans la rainure (5) à proximité du trou traversant (26).

5. Séparateur centrifuge selon l'une quelconque des revendications précédentes, dans lequel l'organe de fil (25) présente une longueur d'environ 0,9 à 1,1 fois la longueur de la bague d'étanchéité (50).

6. Séparateur centrifuge selon l'une quelconque des revendications précédentes, dans lequel l'organe de fil (25) est agencé dans la rainure (5) à une distance d'une surface d'étanchéité (50') de la bague d'étanchéité (50).

7. Séparateur centrifuge selon l'une quelconque des revendications précédentes, dans lequel la bague d'étanchéité (50) comprend ou consiste en un matériau polymère et l'organe de fil (25) comprend ou consiste en du métal ou un alliage métallique, tel que de l'acier inoxydable.

8. Séparateur centrifuge selon l'une quelconque des revendications précédentes, dans lequel l'organe de fil (25) est séparé de la bague d'étanchéité (50).

9. Séparateur centrifuge selon l'une quelconque des revendications précédentes 1-7, dans lequel l'organe de fil (25) est intégré dans la bague d'étanchéité (50).

10. Kit de service configuré pour remplacer une bague d'étanchéité usagée (50) dans une rainure (5) d'une partie de bol supérieure (2) du séparateur centrifuge (100) tel que défini dans l'une quelconque des revendications précédentes 1-9, le kit de service comprenant une bague d'étanchéité de remplacement (50) et un organe de fil (25) associé à la bague d'étanchéité (25).

11. Kit de service selon la revendication 10, dans lequel l'organe de fil (25) présente une première extrémité et une seconde extrémité (25'), une longueur d'environ 0,9 à 1,1 fois la longueur de la bague d'étanchéité (50) et une aire de section transversale, qui est inférieure à 0,5 fois la section transversale de la bague d'étanchéité (50).

12. Kit de service selon la revendication 10 ou 11 comprenant en outre un outil de rupture (60) configuré pour rompre la bague d'étanchéité (50) et déplacer au moins une partie de l'organe de fil (25), lorsqu'il est placé dans la rainure du bol de centrifugeuse (5).

13. Kit de service selon l'une quelconque des revendications 10 à 12 comprenant en outre un outil de levage (70) comprenant des moyens (71) pour recevoir et maintenir une extrémité (25') de l'organe de fil (25).

14. Kit de service selon la revendication 13, dans lequel l'outil de levage (70) est configuré pour être tourné de sorte que l'organe de fil (25) est enroulé autour du corps de l'outil de levage (70).

15. Procédé de retrait d'une bague d'étanchéité (50) d'une rainure annulaire (5) d'une partie de bol supérieure (2) d'un séparateur centrifuge (100) selon l'une quelconque des revendications 1-9, la rainure (5) présentant une ouverture annulaire (5a) vers une partie de bol inférieure (1) et la bague d'étanchéité (50) est agencée en association avec un organe de fil (25) dans la rainure (5), dans lequel le procédé de retrait de la bague d'étanchéité (50) de la rainure comprend :
- la déconnexion de la partie de bol supérieure (2) du bol de centrifugeuse (4) du séparateur centrifuge (100) ;
- la rupture de la bague d'étanchéité (50) au moyen d'un outil de rupture (60 ; 61) ;
- le levage de l'organe de fil (25) associé à la bague d'étanchéité (50) de la rainure (5) dans une direction vers l'ouverture annulaire (5a), selon lequel l'organe de fil (25), qui est agencé en contact avec la bague d'étanchéité (50), lève simultanément la partie associée de la bague d'étanchéité (50) de la rainure (5).

16. Procédé selon la revendication 15, comprenant la saisie d'une extrémité (25') de l'organe de fil (25) et la fixation de l'extrémité à un outil de levage (70 ; 71), puis l'actionnement mécanique de l'outil de levage (70) pour lever l'organe de fil de la rainure (5).

17. Procédé selon la revendication 16, dans lequel l'actionnement mécanique comprend l'enroulement de l'organe de fil (25) autour du corps de l'outil de levage (70).
